# EUROPÄISCHE PATENTSCHRIFT

(11) **EP 1 494 905 B1**
(45) Veröffentlichungstag und Bekanntmachung des Hinweises auf die Patenterteilung: **20.09.2006**
(21) Anmeldenummer: 03711706.6
(22) Anmeldetag: 11.04.2003
(51) Int. Cl.: B60T 8/32, B60K 23/08, B60W 10/02, B60W 10/18, B60W 30/14

(54) **KRAFTFAHRZEUG MIT EINEM BREMSSYSTEM UND EINEM ANTRIEBSSYSTEM**
MOTOR VEHICLE EQUIPPED WITH A BRAKE SYSTEM AND WITH A DRIVE SYSTEM
VEHICULE AUTOMOBILE PRESENTANT UN SYSTEME DE FREINAGE ET UN SYSTEME D'ENTRAINEMENT

(30) Priorität: 12.04.2002 AT 2302002
(43) Veröffentlichungstag der Anmeldung: 12.01.2005
(73) Patentinhaber: Magna Drivetrain AG & Co KG, 8502 Lannach (AT)
(72) Erfinder: GRATZER, Franz, A-8152 Stallhofen (AT)
(74) Vertreter: Manitz, Finsterwald & Partner GbR
(86) Internationale Anmeldenummer: PCT/AT2003/000107
(87) Internationale Veröffentlichungsnummer: WO 2003/086831

(56) Entgegenhaltungen:
- EP-A- 0 911 205
- DE-A- 3 721 626
- DE-A- 10 138 168
- US-A- 6 005 358

## Beschreibung

Die Erfindung betrifft ein Kraftfahrzeug mit einem Bremssystem und einem Antriebssystem, wobei das Bremssystem besteht aus: einem Fahrdynamikregler, einer elektronischen Steuergruppe zur radspezifischen Bremsenansteuerung und einer Hydraulikeinheit mit Druckmediumversorgung und zu einer Baugruppe zusammengefassten radspezifischen Hydraulikventilen für die Betätigung der einzelnen Radbremszylinder, und wobei das Antriebssystem mindestens einen dem Radantrieb dienenden Antriebsstrang aufweist, in dem eine steuerbare Kupplung angeordnet ist, welche Kupplung von einem Kupplungsregler in Abhängigkeit von Betriebsgrößen über eine Kupplungsansteuerung und ein Hydraulikventil für die Beaufschlagung ihres hydraulischen Aktuators betätigt wird.

Bremssysteme mit radspezifischen Hydraulikventilen für die Betätigung der einzelnen Radbremszylinder sind eine rezente Entwicklung, und besonders geeignet für die Anwendung moderner Fahrhilfen, wie ABS (Anti-Blockier-Steuerung), ETS (elektronische Traktionssteuerung) und ESP (elektronisches Stabilitätsprogramm). Sie können beispielsweise elektrohydraulische Bremssysteme (in der Fachliteratur oft kurz "EHB") sein, wie etwa in der DE 199 23 689 A1 beschrieben.

Das Antriebssystem kann einen oder mehrere Antriebsstränge umfassen, entsprechend einem Fahrzeug mit einer oder mit mehreren angetriebenen Achsen. Im ersten Fall dient die steuerbare Kupplung der nach fahrdynamischen Erfordernissen kontinuierlich variablen Sperrung des Achsdifferentiales. Im zweiten Fall kann sie der kontinuierlich variablen Zuschaltung der weiteren angetriebenen Achse oder der Sperrung eines Zentraldifferentiales (auch Zwischenachsdifferential genannt), oder der Regelung der Momentenverteilung zwischen den beiden Achsen dienen.

Bei ausgeführten Antriebssystemen dieser Art ist die Kupplung, beziehungsweise sind die Kupplungen jeweils eine eigene Funktionsgruppe mit einer eigenen Kraftquelle und einem eigenen Steuergerät, das die Betriebsdaten des Fahrzeuges aus einem Bus (meist ist es ein CAN-Bus) bezieht, aus diesen die erforderliche Kupplungsstellung berechnet und die Kupplung dann entsprechend ansteuert. Die meisten dieser Betriebsdaten werden, nebst anderen, aber auch vom Fahrdynamikregler des Bremssystemes verwendet und daher aus demselben Bus bezogen.

Weiters muss sich das Bremssystem in manchen Fahrsituationen mit der Kupplungssteuerung abstimmen. Das bedeutet, dass zwei getrennte Systeme miteinander kommunizieren müssen, wobei die Daten zwischen den beiden Reglern, die in der Regel programmierte Prozessoren sind, über Schnittstellen, Kodierung/Dekodierung und den Bus verbunden und ausgetauscht werden. Das ist eine Fehlerquelle und braucht obendrein Zeit, die bei Fahrdynamikregelungen immer kritisch ist. Außerdem ist der Aufwand für Steuerung und Betätigung erheblich, sowohl logistisch, als auch weil die Sicherheitsanforderungen an die Kupplungssteuerung einen Mindestaufwand diktieren, der über den an sich geringen Umfang der reinen Steueraufgaben hinausgeht.

Zwar ist aus der DE 37 21 626 ein Kraftfahrzeug mit Vierradantrieb der ersten Generation bekannt, bei dem vom Hauptbremszylinder einer Bremsvorrichtung die Radbremsen der Räder beaufschlagt werden, und auch das Stellglied einer Kupplung betätigt wird. Die Bremsvorrichtung ist allerdings rein hydraulisch und verfügt daher über keine elektronisch angesteuerten radspezifischen Hydraulikventile. Die Kupplung dient nur der Unterbrechung der Antriebsverbindung beim Bremsen und ist nicht variabel ansteuerbar.

EP 911205 A offenbart schließlich ein Kraftfahrzeug mit einem Bremssystem und einem Antriebssystem gemäß dem Oberbegriff des Anspruchs 1.

Es ist daher Aufgabe der Erfindung, bei Verbilligung des Gesamtfahrzeuges auch eine funktionelle Verbesserung zu erreichen. Dazu ist erfindungsgemäß in den Fahrdynamikregler des Bremssystemes der Kupplungsregler des Antriebssystemes integriert, das Hydraulikventil für die Betätigung der Kupplung an die Druckmediumversorgung des Bremssystemes angeschlossen und Teil der Hydraulikventil-Baugruppe.

Damit werden nicht nur zwei mal zwei ähnliche Systeme zu jeweils nur einem zusammengeführt, sondern auch die Kommunikation zwischen den zwei Reglern in das Programm des nunmehr einzigen Reglers verlegt, sie wird sozusagen verinnerlicht, wodurch eine Fehlerquelle ausgeschaltet und Zeit gewonnen wird. Praktisch bedeutet das, dass bei Implementierung der Erfindung an der Hardware des Fahrdynamikreglers überhaupt keine Veränderungen nötig sind, es genügt eine Adaptierung des Programmes, meist nur in wenigen Details. Den hohen Sicherheitsanforderungen ist für die Steuerung des Bremssystemes sowieso Genüge getan.

Die gemeinsame Druckmediumversorgung von Bremssystem und Kupplung bringt zunächst eine erhebliche Verbilligung, weil eine Pumpe samt Antrieb, Ventilen und Leitungen wegfällt. Elektrohydraulische Bremssysteme haben jedenfalls einen Hochdruckspeicher, sodass auch bei Gleichzeitigkeit genug Druckmedium zur Verfügung steht. Dazu kommt noch die Gleichartigkeit der Aktuatoren hinsichtlich Kraft und Weg, die der Versorgung durch nur eine Kraftquelle zugute kommen. Elektrohydraulische Bremssysteme machen es somit möglich, mit dem Vorurteil der sicherheitsrelevanten Eigenständigkeit eines Bremssystemes zu brechen. Dadurch, dass auch das Hydraulikventil für die Kupplung Teil dieser Baugruppe ist, wird der Integrationsgrad der beiden Systeme erhöht, meist sogar ganz ohne Mehraufwand, wenn die als Baugruppe verwendeten modularen Ventilblöcke eine Reserveeinheit ("fiktives fünftes Rad") enthalten. Die für Bremssysteme eingesetzten Ventile und Leitungen erfüllen höchste Sicherheitsanforderungen, umso leichter auch die Anforderungen der Kupplungssteuerung.

In vollendeter Weiterbildung ist weiters auch noch die Kupplungsansteuerung in die elektronische Steuergruppe integriert (Anspruch 2). Diese ist meist auch modular aufgebaut und besteht aus den Treibern, die die vom Fahrdynamikregler kommenden Signale in Steuerstrom für die Steuerventile umsetzen. Auch hier wird von der Modularität dieser Baugruppe Gebrauch gemacht.

Im Folgenden wird die Erfindung anhand von Abbildungen beschrieben und erläutert. Es stellen dar:
- Fig. 1:: Ein grobes Schema der Erfindung,
- Fig. 2:: schematisch ein elektrohydraulisches Bremssystem mit dem erfindungsgemäß integrierten System.

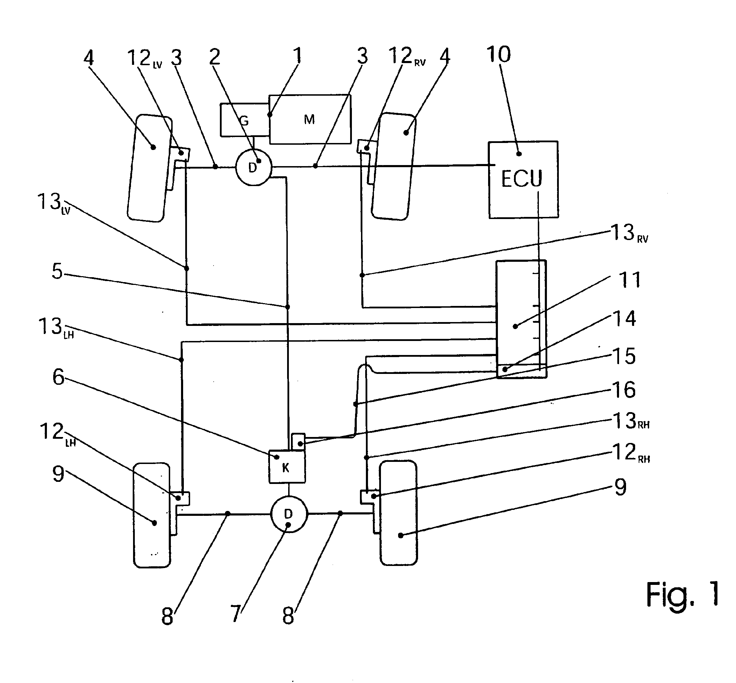

In **Fig. 1** ist beispielsweise ein Fahrzeug mit vorne quer angeordnetem Motor-Getriebeblock 1 dargestellt. Für die Erfindung ist das jedoch unwesentlich, sie ist bei jeder anderen Triebwerkskonstellation ebenso anwendbar. Hier ist der Motor-Getriebeblock 1 über ein Vorderachsdifferential 2 und die Halbwellen 3 mit den Rädern 4 der Vorderachse verbunden. Diese Verbindung bildet einen ersten, sehr kurzen, Antriebsstrang. Vom Vorderachsdifferential 2 führt eine Kardanwelle 5 über eine Kupplung 6, ein Hinterachsdifferential 7 und hintere Halbwellen 8 zu den Rädern 9. Das ist ein zweiter Antriebsstrang. Die in diesem enthaltene steuerbare Kupplung 6 dient der Steuerung der Drehmomentverteilung zwischen Vorderachse und Hinterachse. Ebensogut könnte die Antriebskraft vom Motor-Getriebeblock 1 über ein nicht dargestelltes Zentraldifferential auf die beiden Achsdifferentiale 2,7 verteilt werden. In diesem Fall wäre die steuerbare Kupplung eine einstellbare Differentialsperre.

Das Bremssystem besteht aus einem Fahrdynamikregler 10, einer hier summarisch mit 11 bezeichneten Steuerungsgruppe mit nicht dargestellten Ventilen, von denen aus über Bremsleitungen 13 (in der Fig. mit Indizes versehen) Radbremszylindern 12 (ebenfalls indiziert) betätigt werden. Die Kupplungsansteuerung 14 ist hier als Anhängsel der Steuergruppe 11 angedeutet, von ihr führt eine Druckleitung 15 zu dem Aktuator 16 der Kupplung 6.

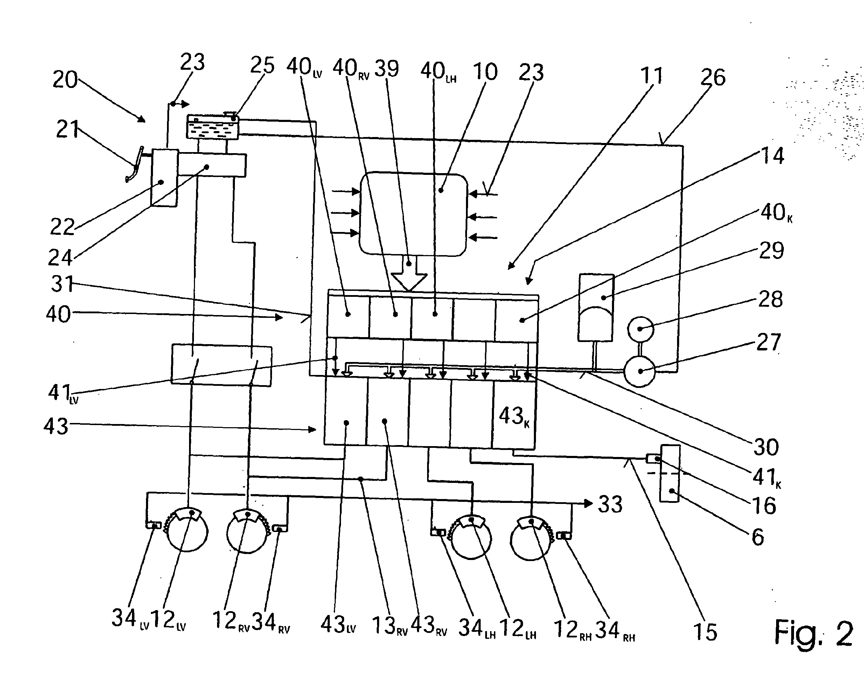

In **Fig. 2** ist das mit der Kupplungssteuerung vereinigte Bremssystem in der Ausführungsform mit dem höchsten Integrationsgrad etwas mehr im Detail dargestellt. Eine summarisch mit 20 bezeichnete Betätigungseinheit besteht aus einem Bremspedal 21, einem Bremswunschsensor 22, von dem eine Signalleitung 23 zum Fahrdynamikregler 10 führt, aus einem Bremszylinder 24, der der Pedalwegsimmulation und der Ausfallsicherung dient, und einem Fluidbehälter 25. Der Fluidbehälter 25 ist bereits Teil der Druckmediumversorgung. Von ihm führt eine Saugleitung 26 zu einer von einem Motor 28 angetriebenen Fluidpumpe 27. Die Steuerung der Pumpe 27 und zugehörige Ventile sind nicht dargestellt. Auf der Druckseite der Pumpe 27 führt eine Druckleitung 30 zu der Steuergruppe 11, mit einem Druckspeicher 29 im Nebenfluss. Von der Steuergruppe führt ein Rücklauf 31 wieder zum Fluidbehälter 25.

Der Fahrdynamikregler 10 des Bremssystemes ist als Prozessor so programmiert, dass er die Funktion eines Kupplungsreglers mitübernehmen kann, da sämtliche fahr- und betriebszustandsrelevanten Messgrößen zu ihm gelangen, beispielsweise das Bremswunschsignal des Fahrers (Leitung 23) oder über die Leitung 33 die Drehzahlsignale der Raddrehzahlsensoren 34, die in Fig. 2 wieder mit den entsprechenden Indizes versehen sind. Weitere Größen sind Lenkwinkel, Beschleunigungen, etc. Alle diese Signale werden im Fahrdynamikregler 10 zu Steuergrößen für die Bremskräfte bzw. die Bremsdrucke und für das von der Kupplung 6 übertragene Moment erzeugt. Diese Steuersignale 39 werden der summarisch mit 11 bezeichneten Steuergruppe 11 zugeführt.

Die Steuergruppe 11 besteht aus einer modular aufgebauten elektronischen Steuergruppe 40, in der die Ansteuersignale 39 in Schaltströme umgesetzt werden, die über Leitungen 41 in eine ebenfalls modular aufgebaute Ventilgruppe 43 gelangen. Der modulare Aufbau besteht darin, dass jeder Modul einem Rad zugeordnet ist, entsprechend sind diese in Fig. 2 mit Indizes versehen. Zusätzlich zu den 4 den einzelnen Radbremsen zugeordneten Modulen ist sozusagen als fünftes Rad am Wagen ein weiterer Modul 40 für die Kupplungsansteuerung vorgesehen. Vielfach ist bereits in Steuergruppen nach dem Stand der Technik ein Reservemodul vorgesehen, der normalerweise brach liegt. Dieser kann mit der erhndungsgemäßen Aufgabe betraut werden. In der modularen Ventilgruppe 43, wieder sind die einzelnen Module mit den entsprechenden Indizes versehen, schaltet jeweils ein Hydraulikventil geführt von dem Steuerstrom 41, den von der Druckleitung 30 zu den Radbremszylindern 12 geleiteten Druckfluidstrom. Daher schließt dort auch der Rücklauf 31 an.

## Patentansprüche

1. Kraftfahrzeug mit einem Bremssystem und einem Antriebssystem, wobei
a) das Bremssystem besteht aus: einem Fahrdynamikregler (10), einer elektronischen Steuergruppe (40) zur radspezifischen Bremsenansteuerung und einer Hydraulikeinheit mit Druckmediumversorgung (25,27,30) und zu einer Baugruppe (43) zusammengefassten radspezifischen Hydraulikventilen (43_{LV}, 43_{RV}, 43_{LH}, 43_{RH}) für die Betätigung der einzelnen Radbremszylinder (12_{LV}, 12_{RV}, 12_{LH}, 12_{RH}), und
b) das Antriebssystem mindestens einen dem Radantrieb dienenden Antriebsstrang (2,3; 5,7,8) aufweist, in dem eine steuerbare Kupplung (6) angeordnet ist, welche Kupplung (6) von einem Kupplungsregler in Abhängigkeit von Betriebsgrößen über eine Kupplungsansteuerung (40_{K}) und ein Hydraulikventil (43_{K}) für die Beaufschlagung ihres hydraulischen Aktuators (16) betätigt wird,
**dadurch gekennzeichnet, dass** in den Fahrdynamikregler (10) des Bremssystemes der Kupplungsregler des Antriebssystemes integriert ist und das Hydraulikventil (43_{K}) für die Betätigung der Kupplung (6) an die Druckmediumversorgung (25,27,30) des Bremssystemes angeschlossen und Teil der Baugruppe (43) ist.

2. Kraftfahrzeug nach Anspruch 1, **dadurch gekennzeichnet, dass** die Kupplungsansteuerung (40_{K}) in die elektronische Steuergruppe (40) integriert ist.

## Claims

1. A motor vehicle having a brake system and a drive system, wherein
a) the brake system is composed of: a vehicle movement dynamics controller (10), an electronic control group (40) for wheel-specific actuation of brakes and a hydraulic unit with pressure medium supply (25, 27, 30) and wheel-specific hydraulic valves (43_{LV}, 43_{RV}, 43_{LH}, 43_{RH}), combined to form one assembly (43), for activating the individual wheel brake cylinders (12_{LV}, 12_{RV}, 12_{LH}, 12_{RH}), and
b) the drive system has at least one drive train (2, 3; 5, 7, 8) which has the purpose of driving the wheels and in which a controllable clutch (6) is arranged, which clutch (6) is activated by a clutch controller as a function of operating variables using a clutch actuation means (40_{K}) and a hydraulic valve (43_{K}) for acting on its hydraulic actuator (16),
**characterized in that** the clutch controller of the drive system is integrated into the vehicle movement dynamics controller (10) of the brake system, and the hydraulic valve (43_{K}) for activating the clutch (6) is connected to the pressure medium supply (25, 27, 30) of the brake system and is part of the assembly (43).

2. The motor vehicle as claimed in claim 1, **characterized in that** the clutch actuation means (40_{K}) is integrated into the electronic control group (40).

## Revendications

1. Véhicule automobile comportant un système de freinage et un système d'entraînement, dans lequel :
a) le système de freinage est constitué : d'un régulateur de dynamique de roulement (10), d'un module de commande électronique (40) destiné à effectuer une commande de freinage spécifique aux roues et une unité hydraulique comportant une alimentation en fluide sous pression (25, 27, 30) et des clapets hydrauliques (43_{LV}, 43_{RV}, 43_{LH}, 43_{RH}) spécifiques aux roues qui sont rassemblés en un module (43) et qui sont destinés à commander l'unique cylindre de freinage de roue associé (12_{LV}, 12_{RV}, 12_{LH}, 12_{RH}), et
b) le système d'entraînement comporte au moins une branche d'entraînement (2, 3 ; 5, 7, 8) qui sert à l'entraînement des roues et dans laquelle est disposé un couplage commandé (6), lequel couplage (6) est commandé, en fonction de grandeurs de fonctionnement, par un régulateur de couplage par le biais d'une commande de couplage (40_{K}) et d'un clapet hydraulique (43_{K}) en vue de solliciter son actionneur hydraulique (16),
**caractérisé en ce que** le régulateur de couplage du système d'entraînement est intégré dans le régulateur de dynamique de roulement (10) du système de freinage, et le clapet hydraulique (43_{K}) destiné à la commande du couplage (6) est raccordé à l'alimentation en fluide sous pression (25, 27, 30) du système de freinage et fait partie du module (43).

2. Véhicule automobile selon la revendication 1, **caractérisé en ce que** la commande de couplage (40_{K}) est intégrée dans le module de commande électronique (40).
